(19) Europäisches Patentamt

European Patent Office

Office européen des brevets

(11) **EP 4 321 972 A1**

(12) **EUROPEAN PATENT APPLICATION**

(43) Date of publication:
**14.02.2024 Bulletin 2024/07**

(21) Application number: **22190208.3**

(22) Date of filing: **12.08.2022**

(51) International Patent Classification (IPC):
***G06F 3/01*** *(2006.01)*

(52) Cooperative Patent Classification (CPC):
**G06F 3/011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siec Innowacyjna HO'X
00-661 Warszawa (PL)**

(72) Inventors:
• **PODSIADLO, Slawomir
02-495 Warszawa (PL)**
• **KOZIELSKI, Lukasz
05-506 Lesznowola (PL)**
• **SAMOCIAK, Przemyslaw
02-990 Warszawa (PL)**

(74) Representative: **Markieta, Jaroslaw Franciszek
Kancelaria Rzeczników Patentowych
J. Markieta, M. Zielinska-Lazarowicz Sp. p.
Bukowinska 2 lok 160
02-703 Warszawa (PL)**

(54) **TRANSLOCATIONAL AUGMENTED REALITY SYSTEM**

(57) A translocational augmented reality system comprising a receiver of an external digital multimedia stream, an augmented reality subsystem at the user's location comprising a set of metadata representing the user's environment, a set of position sensors adapted to locate the user in the user's environment, unit for presenting data of the digital multimedia stream in the user's environment, a controller provided with a set of sensors adapted to capture position and direction data of the controller in the user's environment and a user-operated input interface characterised in that, that it further includes a subsystem for generating the digital multimedia stream adapted to combine an external digital multimedia stream with signals from a set of position sensors conveying information about the user's location in the user's environment, and signals from a controller provided with a set of sensors adapted to capture position and direction data of the controller in the user's environment to generate a combined digital multimedia stream, and that the unit for presenting data of the digital multimedia stream in the user's environment is adapted to present a digital combined multimedia stream.

Fig. 1

EP 4 321 972 A1

**Description**

The object of the invention is a translocational augmented reality system. According to the invention, the system is used in entertainment, educational and service systems, where virtual objects and real local objects from different locations are reflected in a common augmented reality space.

There are augmented reality systems known in the current state of the art that allow the presentation of virtual objects in local space. For example, US2021357019A1 discloses the extension of the augmented reality environment to the real world, which can allow a user to post a photo of the augmented reality environment to a social media forum, scan a barcode in the augmented reality environment and send the read data as input to a personal device, use the location in the augmented reality environment as the location used by a personal device, and use the augmented reality environment to access countless various applications on a user's personal device. It also describes a computing device that generates an augmented reality environment, which comprises a processor to create the augmented reality environment on the computing device and emulates the hardware associated with the real-world mobile computing device in the augmented reality environment; a network adapter to connect the computing device to the real world mobile computing device for communication; and an augmented reality data capture module to collect data defining the augmented reality environment and provide the data to the mobile computing device for processing by an application associated with the real world mobile computing device.

Chinese patent application CN106773063A discloses an invention for a pair of augmented reality smart glasses that can be matched to different hosts. Specifically, the invention provides a pair of augmented reality smart glasses. The glasses include an eyepiece terminal, an adapter, and a central operational unit, wherein the eyepiece terminal and adapter are separate from the central unit. The eyepiece terminal and adapter can be customised to fit different central operational units. Smart augmented reality glasses can provide a good quality display and long-lasting comfortable wear, thus enabling a wide versatility of applications. The glasses are small; the weight is light, and no additional external equipment is needed. The glasses can be worn like ordinary eyeglasses; both hands of the user are truly free; various requirements for the application environment can be met; portability and transportation are convenient.

U.S. patent application US2017228916A1 describes a system for an augmented, multi-person mixed reality experience. The fast video rendering engine gathers mixed reality content data from multiple sources. A high-speed, low-latency memory map is then rendered. All parts or subparts defined by the point of view of this main memory map are then sent either to auxiliary servers with smaller capabilities that support one to three mixed reality goggles or directly to ten or more virtual reality goggles. The user experience can be enhanced by providing physical props, sounds or actions based on indications from the content of the mixed reality data.

The subject matter of the invention is a translocational augmented reality system comprising an external digital multimedia stream receiver, an augmented reality subsystem at the user's location comprising a set of metadata representing the user's environment, a set of position sensors adapted to locate the user in the user's environment, a unit for presenting data of the digital multimedia stream in the user's environment, a controller provided with a set of sensors adapted to capture position and direction data of the controller in the user's environment, and a user-operated input interface. According to the invention, the system is characterised in that it includes a subsystem for generating the digital multimedia stream adapted to combine an external digital multimedia stream with signals from a set of position sensors conveying information about the user's location in the user's environment, and signals from a controller provided with a set of sensors adapted to capture data about the controller's position and direction in the user's environment, generating a combined digital multimedia stream. Furthermore, the system according to the invention is provided with a unit for presenting data of the digital multimedia stream in the user's environment and is adapted to present a digital combined multimedia stream.

According to the invention, the system is characterised in that the external digital multimedia stream is a 2D multimedia stream, 3D multimedia stream, and 360° multimedia stream.

The system according to the invention is characterised in that the external multimedia stream contains content with a linear timeline, a multi-track timeline, or content with an unstructured timeline.

The system according to the invention is characterised in that the subsystem for generating the digital multimedia stream combines an external digital multimedia stream with at least one local multimedia stream and signals from a set of position sensors adapted to locate the user in the user's environment to generate a combined digital multimedia stream.

Furthermore, the system, according to the invention, is characterised in that it also includes a receiver of a digital combined multimedia stream from another location, and the subsystem for generating the digital combined multimedia stream is adapted to combine an external digital multimedia stream with external digital combined multimedia stream from other location, signals from a set of position sensors conveying information about the user's location in the user's environment, and signals from a controller provided with a set of sensors adapted to capture data about the controller's position and direction in the user's environment, generating a combined digital multimedia stream. In addition, the system includes a transmitter that sends at least part of the combined digital multimedia stream to another location.

The system according to the invention allows combining external digital multimedia streams with a locally generated digital stream, enabling user interaction with external multimedia content using objects in the user's local space. The system can be connected to a feedback loop of measurement signals describing the user's local environment, the user's location and the location of the controller, generating signals for interaction with an external digital multimedia stream, presenting external stream objects and virtual objects in the user's local environment.

In particular, the system allows a multi-player game scenario to be played out in a single virtual space within a shared gameplay (world) timeline and with local real and virtual objects from multiple real-world locations of individual users.

The advantageous embodiment of the subject of the invention has been shown in greater detail in the following figures, whereby:

Fig. 1   shows a system according to the invention in the first embodiment;

Fig. 2   shows digital streams according to the invention in one embodiment;

Fig. 3   shows digital streams according to the invention in another embodiment;

Fig. 4   shows digital streams according to the invention in another embodiment;

Fig. 5   shows a system according to the invention in another embodiment;

Fig. 6   shows the components of the system according to the invention at the user's location;

Fig. 7   shows a block diagram of the components of the system according to the invention at the user's location.

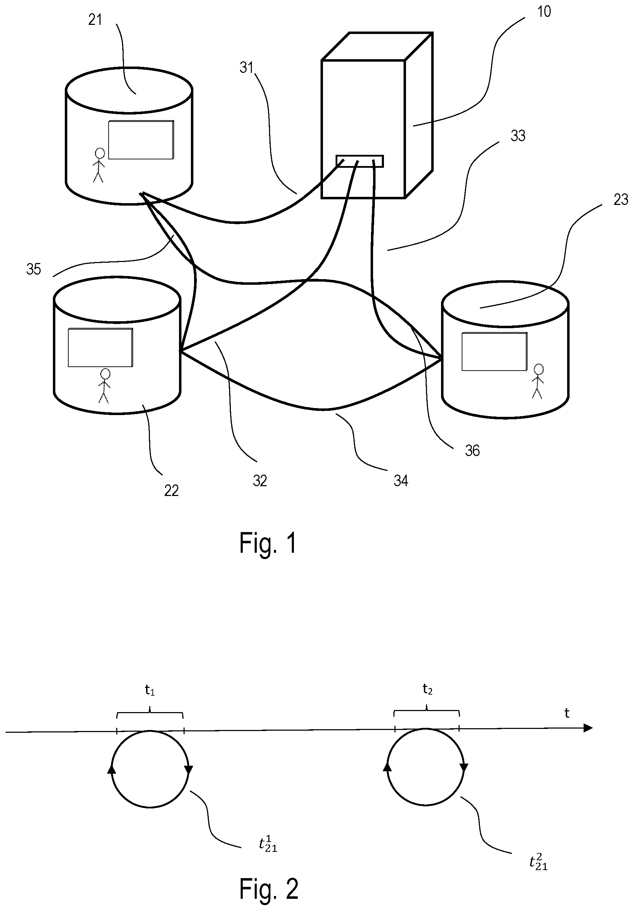

Fig. 1 shows the system according to the invention in the first embodiment, in particular its hardware layer. The system in fig. 1 comprises of a source 10 of external digital multimedia stream and three subsystems 21, 22, 23 of augmented reality at user locations. Source 10 of the external digital multimedia stream transmits the t-stream to augmented reality subsystems 21, 22, 23 at user locations, via digital links 31, 32, 33. In addition, subsystems 21, 22, 23 at user locations can be connected via digital direct links 34, 35, 36. Digital links can be any type of digital link capable of carrying a digital stream, and include wired, fibre-optic, wireless links, independent of the channel modulation systems used. A t-stream is a digital stream that has the ability to embed additional multimedia data packets in the t-stream.

The user's location may be an indoor space, or it may be an open space, an urbanised area or a natural space such as a forest. The user's location is limited to the territory for which metadata describing its shape and the objects in that space can be retrieved, and which can be covered by the sensors determining the user's location.

Subsystems 21, 22, 23 of augmented reality at user locations include a set of metadata representing the user's environment, a set of position sensors adapted to locate the user in the user's environment, a unit for presenting data of the digital multimedia stream in the user's environment, and a controller provided with a set of sensors adapted to capture position and direction data of the controller in the user's environment, and a user-operated input interface.

Subsystems 21, 22, 23 hold a set of metadata describing the space at the user's location, which defines physical parameters, such as the width, length, height of the room, objects in the room, and the location and position of the users. Subsystems 21, 22, 23 are designed to monitor the location and position of users 11, 12, 13 in real-time. In addition, subsystems 21, 22, 23 are adapted to receive and transmit signals from a controller provided with a set of sensors adapted to capture position and direction data of the controller in the user's environment, as well as signals from a user-operated input interface, such as signals about pressing control keys or a trigger.

A set of signals determining the space at the user's location, the user's position in that space, and signals about the location of the controller and the state of the interfaces are sent to a subsystem for generating the digital multimedia stream adapted to combine the external digital multimedia stream with signals from the user's location. Such a combined digital stream allows multimedia content carried by an external digital multimedia stream to be integrated and presented with the environment at the user's location. It also allows the user to interact with objects in an environment of its own location enhanced with virtual objects generated from an external digital multimedia stream. Such interaction is achieved by means of a unit for presenting data of the digital multimedia stream in the user's environment adapted to present the digital combined multimedia stream, whereas such a unit may be augmented reality presentation glasses that allow augmented reality objects to be presented, or another system that presents augmented reality objects in the user's environment in a manner perceptible by the senses, while receiving location signals from both the user and the controller, as well as control signals from the controller.

The external digital multimedia stream is a 2D multimedia stream, 3D multimedia stream, and 360° multimedia stream, respectively projected in space at the user's location.

The external multimedia stream contains content with a linear timeline, a multi-track timeline or content with an unstructured timeline. Content transmitted in the external stream can create a worldline perceived from the user's perspective. A worldline means a grouping in a single digital stream of data representing a sequence of events occurring in mutual relation within an ongoing scenario. According to the invention, a local timeline, such as gameplay, can be added to the original external timeline contained in the external digital multimedia data stream, which is perpendicular to the external timeline. When the game is over, the user returns to the external stream and the external timeline, in the same place where s/he left it. Timelines can lead to alternative scenarios or to a completely unstructured timeline in which it is the user's decisions that lead the way the scenario unravels.

The subsystem for generating the digital multimedia stream combines an external digital multimedia stream with at least one local multimedia stream and signals from a set of position sensors adapted to locate the user in the user's environment to generate a combined digital multimedia stream. Combining an external multimedia stream with a local multimedia stream allows user interaction.

According to an advantageous embodiment of the invention, the system includes a receiver of a digital combined multimedia stream from another location, and the subsystem for generating the digital combined multimedia stream is adapted to combine an external digital multimedia stream with external digital combined multimedia stream from other location, signals from a set of position sensors conveying information about the user's location in the user's environment, and signals from a controller provided with a set of sensors adapted to capture data about the controller's position and direction in the user's environment, generating a combined digital multimedia stream, and the system furthermore comprises of a transmitter that transmits at least part of the combined digital multimedia stream to another location.

Fig. 2 shows digital streams according to the invention in one embodiment. This figure shows the main stream of digital multimedia data, t. This is, for example, a stream carrying a video shot in 360° technology. In the stream, two periods $t_1$ and $t_2$ were prepared, adapted to the user's interaction in a space that is a combination of scenery from the video embedded in the user's local environment. The interaction takes place in subsystem 21 at the user's location and creates gameplay that is detached from the main timeline, resembling a game between characters from the main stream and the local user. A local timeline $t_{21}^1$ is created since in this embodiment the effect of gameplay does not affect the subsequent course of events in the external stream; once the interaction is completed, the playback of the main stream of digital multimedia data is resumed until the period $t_2$, in which another interaction $t_{21}^2$, etc. can be undertaken using subsystem 21.

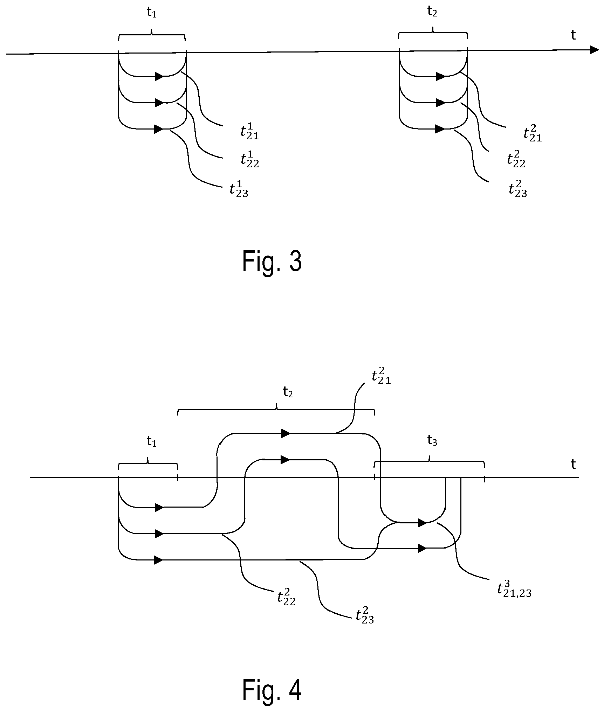

Fig. 3 shows the digital streams according to the invention in another embodiment, where several local subsystems 21, 22, 23 provide independent integration of local digital multimedia streams with an external digital multimedia stream (t). Thus, similar to the example in fig. 2, local timelines $t_{21}^1, t_{22}^1, t_{23}^1$ are created, since in this embodiment the effect of gameplay also does not affect the subsequent course of events in the external stream; once the interaction is completed, the playback of the main stream of digital multimedia data is resumed until the period t2, in which another interaction $t_{21}^2, t_{22}^2, t_{23}^2$, etc. can be undertaken using subsystems 21, 22, 23.

Fig. 4 shows the digital streams according to the invention in another embodiment, where several local subsystems 21, 22, 23 provide a combined integration of local digital multimedia streams with an external digital multimedia stream (t). Thus, similar to the example in figure 2, local timelines $t_{21}^1, t_{22}^1, t_{23}^1$ are created along with shared timelines $t_{21,23}^1$. In addition, in this embodiment, the effect of gameplay affects the subsequent course of events in the external t-stream; once the interaction is completed, separate independent multimedia data streams are created resulting from user interaction manifested in the form of control signals from controllers 46. The playback of multiple digital multimedia data streams goes sequentially through periods of merging and bifurcation until the t2 period, where it is possible to undertake another parallel interaction and create streams $t_{22}^3, t_{21,23}^3$ respectively etc. using subsystems 21, 22, 23.

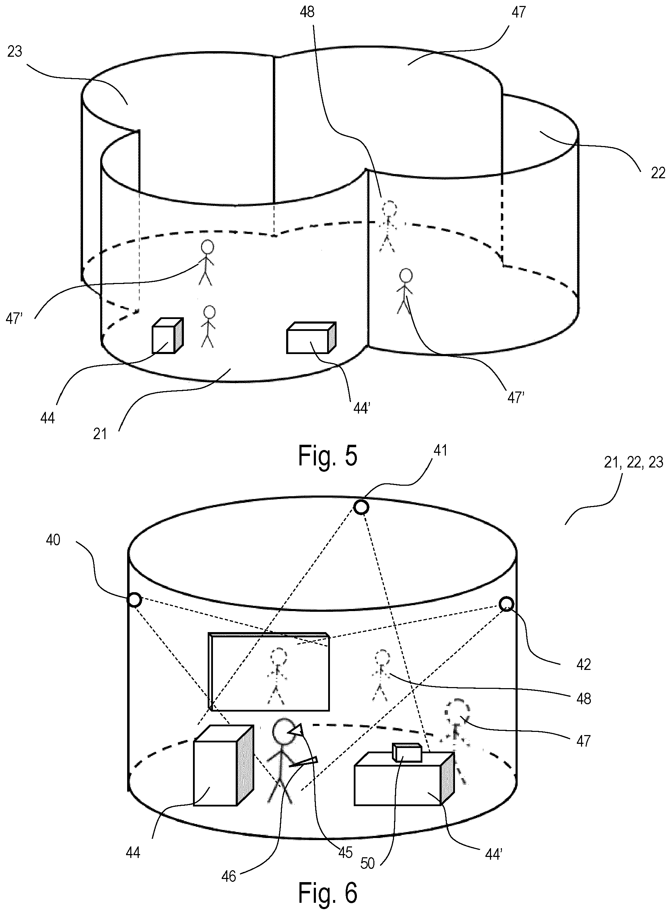

Fig. 5 shows a system according to the invention in another embodiment in which three local systems of users 21, 22, 23 are connected to a system 24 that generates a completely virtual extension of local reality from the perspective of local systems 21, 22, 23. The local users 47' using their own local systems are able to receive a combined multimedia stream including and combining them into a common space (from the user's perspective) four locations - three physical locations and one virtual location. In the virtual augmentation, objects 48 appear, which are generated by the system 10 extracting the part responsible for the operation of the subsystem 24 from its resources.

Fig. 6 shows the components of the system according to the invention at the user's location. Subsystem 21, 22, 23 at the user's location contain a set of sensors 40, 41, 42 that determine the user's location in the local environment at the user's location. Sensors 40, 41, 42 also allow mapping the user's local environment and identifying spatial objects such as a sofa, chair table, symbolically marked in fig. 6 with numbers 44, 44'. Sensors 40, 41, 42 can be any sensors that allow obtaining spatial information from the user's location; they can be video cameras, infrared cameras, LiDAR sensors, echolocation sensors, and in open space, for example, a positioning system, whether using GPS satellite, GALILEO, RFID radio, GSM signal triangulation or inertial navigation systems. The subsystem at the user's location also includes a controller 46, which position and direction are determined in the subsystem through sensors 40, 41, 42, and/or through the use of acceleration sensors, cameras or other sensors inside the controller 46. The controller 46 is also provided with a set of control buttons to receive control signals from the user.

In addition, the subsystem is equipped with goggles 45 that allow virtual objects 47 embedded in the user's local environment to be presented to the user. The system for the presentation of virtual object incorporates multimedia streams from other local user locations 22, 23 into the external stream; in addition, it also incorporates multimedia streams generated entirely virtually, resulting in the appearance of virtual objects 48.

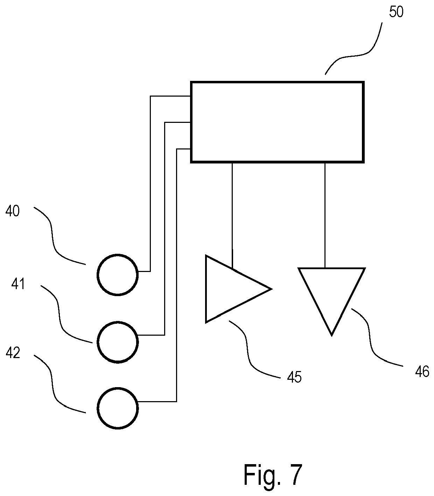

Fig. 7 shows a block diagram of the components of the system according to the invention at the user's location 21, 22, 23. The diagram shows a subsystem for generating the digital multimedia stream 50 adapted to combine an external digital multimedia stream with signals from a set of position sensors 40, 41, 41 conveying information about the user's location in the user's environment, and signals from a controller 46 provided with a set of sensors adapted to capture data about the controller's position and direction in the user's environment. The subsystem 50 also has a connection to the unit for presenting data 45 of the digital multimedia stream in the user's environment, which is adapted to present the digital combined multimedia stream. The unit for presenting data can be goggles, glasses, 2D, 3D projectors or other devices for presenting a multimedia stream as perceived by the human senses.

## Claims

1. Translocational augmented reality system, comprising:

   a receiver of an external digital multimedia stream (t),
   augmented reality subsystem at the user's location, comprising:

   a set of metadata representing the user's environment,
   a set of position sensors (40, 41, 42) adapted to locate the user in the user's environment,
   a unit for presenting data (45) of the digital multimedia stream in the user's environment, a controller (46) provided with a set of sensors adapted to capture position and direction data of the controller in the user's environment and user-operated input interface,
   **characterised in that** it also includes

   a subsystem (50) for generating the digital multimedia stream adapted to combine an external digital multimedia stream with signals from a set of position sensors (40, 41, 45) conveying information about the user's location in the user's environment, and signals from a controller (46) provided with a set of sensors adapted to capture data about the controller's position and direction in the user's environment,
   generating a combined digital multimedia stream ( $t_{21}^1$ ), and that a unit for presenting data (45) of the digital multimedia stream in the user's environment is adapted to present a digital combined multimedia stream.

2. The system according to claim 1, **characterised in that** the external digital multimedia stream (t) is a 2D multimedia stream, a 3D multimedia stream, a 360° multimedia stream.

3. The system according to claim 1 or 2, **characterised in that** the external multimedia stream (t) contains content with a linear timeline, a multi-track timeline, or content with an unstructured timeline.

4. The system according to any of the claims 1 to 3, **characterised in that** the subsystem for generating the digital multimedia stream combines an external digital multimedia stream with at least one local multimedia stream ( $t_{21}^1$ ) and signals from a set of position sensors adapted to locate the user in the user's environment to generate a combined digital multimedia stream.

5. The system according to any of the claims 1 to 4, **characterised in that** it further comprises:

   the receiver of a digital combined multimedia stream from another location,
   whereas the subsystem (50) for generating the combined digital multimedia stream is adapted to combine:

   the external digital multimedia stream (t), with
   external connected digital multimedia stream from another location ( $t_{22}^1$ ),
   with signals from a set of position sensors ( $t_{22}^1$ ) adapted to locate the user in the user's environment,
and signals from a controller (45) provided with a set of sensors adapted to capture position and direction data of the controller in the user's environment,

generating a combined digital multimedia stream $(t_{21}^1, t_{22}^1)$, and the system furthermore includes a transmitter that transmits at least part of a digital combined multimedia stream $(t_{21}^1, t_{22}^1)$ to another location (22, 23).

Fig. 1

Fig. 2

$t_1$

$t_2$

t

$t_{21}^1$

$t_{22}^1$

$t_{23}^1$

$t_{21}^2$

$t_{22}^2$

$t_{23}^2$

Fig. 3

$t_{21}^2$

$t_2$

$t_1$

$t_3$

t

$t_{22}^2$

$t_{23}^2$

$t_{21,23}^3$

Fig. 4

Fig. 5

Fig. 6

50

40

41

42

45

46

Fig. 7

**EUROPEAN SEARCH REPORT**

Application Number

EP 22 19 0208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/221368 A1 (YEN WEI [US] ET AL) 3 September 2009 (2009-09-03) * abstract * * paragraph [0007] - paragraph [0018] * * paragraph [0036] - paragraph [0082]; figures 1A-5 * | 1-5 | INV. G06F3/01 |
| A | US 2013/293468 A1 (PEREZ KATHRYN STONE [US] ET AL) 7 November 2013 (2013-11-07) * abstract * * paragraph [0040] - paragraph [0128]; figures 1A-26 * | 1-5 | |
|  |  |  | TECHNICAL FIELDS SEARCHED (IPC) |
|  |  |  | G06F |

The present search report has been drawn up for all claims

| Place of search | Date of completion of the search | Examiner |
|---|---|---|
| Munich | 23 January 2023 | Liebhart, Manfred |

EPO FORM 1503 03.82 (P04C01)

## ANNEX TO THE EUROPEAN SEARCH REPORT
## ON EUROPEAN PATENT APPLICATION NO.

**EP 22 19 0208**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-01-2023**

| Patent document cited in search report | | Publication date | Patent family member(s) | | Publication date |
|---|---|---|---|---|---|
| US 2009221368 | A1 | 03-09-2009 | CN | 101872241 A | 27-10-2010 |
| | | | EP | 2243525 A2 | 27-10-2010 |
| | | | JP | 2010257461 A | 11-11-2010 |
| | | | US | 2009221368 A1 | 03-09-2009 |
| US 2013293468 | A1 | 07-11-2013 | US | 2013293468 A1 | 07-11-2013 |
| | | | WO | 2013166362 A2 | 07-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021357019 A1
- CN 106773063 A
- US 2017228916 A1